Europäisches Patentamt

European Patent Office

Office européen des brevets

(11) Numéro de publication: **0 365 438**

A1

## (12) DEMANDE DE BREVET EUROPEEN

(21) Numéro de dépôt: 89420373.6

(22) Date de dépôt: 02.10.89

(51) Int. Cl.5: **B60P 3/36 , B60N 2/32**

(30) Priorité: 03.10.88 FR 8813503

(43) Date de publication de la demande:
25.04.90 Bulletin 90/17

(84) Etats contractants désignés:
BE CH DE ES GB IT LI NL

(71) Demandeur: Loisel, Yves
13 rue du Paquier
F-74000 Annecy(FR)

(72) Inventeur: Loisel, Yves
13 rue du Paquier
F-74000 Annecy(FR)

(74) Mandataire: Maureau, Philippe et al
Cabinet GERMAIN & MAUREAU BP 3011
F-69392 Lyon Cédex 03(FR)

(54) Dispositif d'aménagement pour véhicule automobile spacieux.

(57) La présente invention se rapporte à un dispositif d'aménagement pour véhicule automobile spacieux tel que celui commercialisé sous la dénomination "RENAULT ESPACE".

Il est constitué par un caisson unique (3) prévu pour être encastré à l'arrière du véhicule et comprenant une plaque de fond (5) solidaire de deux joues latérales (6) reliées entre elles par trois tubes (8a,8b,8c) au niveau de la surface supérieure du caisson (3). Cette dernière peut être fermée par des couvercles articulés (9) aptes à former, avec une plaque (17) susceptible d'être fixée de manière démontable à l'avant du caisson (3), un plan horizontal de couchage.

FIG.7

EP 0 365 438 A1

## Dispositif d'aménagement pour véhicule automobile spacieux

La présente invention se rapporte à un dispositif d'aménagement, notamment pour les voyages ou les vacances, d'un véhicule spacieux tel que celui commercialisé sous la dénomination "RENAULT ESPACE".

Un tel véhicule peut être équipé d'une rangée de sièges arrière, au nombre de trois en général, qui sont repliables et qui peuvent occuper deux positions longitudinales :
- une position "avancée" où ces sièges arrière sont placés juste derrière les sièges avant, à une distance suffisante de ces derniers pour permettre à des passagers arrière de s'y asseoir,
- une position "reculée" où ces sièges arrière sont placés bien plus loin derrière ces sièges avant. En outre, les dimensions du véhicule sont telles que, dans la position "avancée" de cette rangée de sièges arrière, il est possible de placer derrière ceux-ci une autre rangée de sièges arrière, comportant deux sièges en général, afin d'obtenir une voiture familiale.

Ces véhicules connus ont un espace intérieur relativement large, et il est regrettable que ce large espace ne soit pas utilisé pour assurer le couchage pendant les vacances ou les voyages.

Pour pallier cela, le Demandeur a déjà mis au point un dispositif d'aménagement d'un tel véhicule décrit dans sa demande de brevet français n° 87 73. Ce dispositif, est constitué par deux caissons amovibles de largeur correspondant sensiblement à la largeur intérieure du véhicule. Le premier caisson est prévu pour former un coffre restant normalement en place en permanence dans le véhicule, tandis que le deuxième caisson est prévu pour être disposé dans l'espace libre laissé entre le premier caisson et la rangée de sièges arrière en position "avancée", les deux caissons étant fermés sur le dessus par deux panneaux horizontaux contigüs. Il est, par ailleurs, prévu au moins une plaque plane apte à s'articuler sur le bord supérieur antérieur du deuxième caisson de manière à former, avec les deux panneaux horizontaux, un plan horizontal de couchage lorsque les sièges de la rangée en position "avancée" sont repliés.

Ces dispositions permettent, en ne conservant que le premier caisson, de transporter sept personnes. Mais une telle possiblité est irréaliste dans le cadre d'une exploitation du véhicule en local de camping en raison de l'absence de place suffisante pour sept personnes munies de bagages.

En outre, le Demandeur a pu constater que la structure de son dispositif d'aménagement intérieur était relativement complexe et donc, peu commode à manipuler.

Par ailleurs, ce dispositif n'exploite pas au maximum l'espace intérieur du véhicule.

La présente invention vise à remédier à ces inconvénients et, à cet effet, elle se rapporte à un dispositif d'aménagement pour un véhicule automobile spacieux tel que défini ci-avant et qui est constitué par un seul et unique caisson de forme générale parallélépipédique prévu pour être encastré dans un volume délimité à l'arrière par le hayon du véhicule et à l'avant par la rangée de sièges arrière en position "avancée" et comprenant une plaque de fond reposant sur le plancher du véhicule et solidaire de deux joues latérales reliées au niveau de la surface supérieure du caisson par au moins trois éléments tubulaires transversaux parallèles entre eux, à savoir un élément antérieur, un élément médian et un élément postérieur, la surface supérieure du caisson étant susceptible d'être obturée par des moyens de fermeture et de couchage.

Cette réalisation du dispositif sous la forme d'un caisson unique confère à l'ensemble une importante robustesse et une légèreté lui permettant d'être facilement manipulable par seulement deux personnes. Les éléments tubulaires du caisson permettent de plus une bonne prise en main de celui-ci.

Son contour parallélépipédique délimite un très grand volume intérieur utilisable pour la mise en place d'accessoires et/ou pour le rangement.

Suivant une caractéristique avantageuse de l'invention, le caisson est équipé de moyens supports le surélevant de manière à définir un logement entre sa plaque de fond et le plancher du véhicule, lorsqu'il est placé dans ce dernier.

Conformément à une forme préférée de réalisation du dispositif, les moyens de fermeture et de couchage sont constitués par deux couvercles rectangulaires articulés sur l'élément tubulaire médian. En complément de ces moyens, est prévue une plaque rectangulaire susceptible, en position d'utilisation, d'être fixée, de manière démontable par son bord postérieur en porte-à-faux sur l'élément tubulaire antérieur du caisson, de façon à définir, avec ces moyens de fermeture et de couchage, un plan de couchage sensiblement horizontal lorsque les sièges de la rangée en position "avancée" sont repliés, cette plaque rectangulaire; lorsqu'elle n'est pas en position d'utilisa tion, étant susceptible d'être placée dans le logement prévu pour la recevoir entre la plaque de fond du caisson et le plancher du véhicule.

Ces couvercles articulés permettent un accès aisé à l'intérieur du caisson, tandis que le plateau rectangulaire, qui est d'une utilisation commode, permet d'aménager un plan de couchage de grande surface et stable.

Suivant une variante de réalisation, les moyens de fermeture et de couchage de la surface supérieure du caisson sont constitués par au moins trois plateaux rectangulaires superposables au moins partiellement les uns avec les autres et immobilisés par rapport au caisson par engagement au moins partiel sur les éléments tubulaires et/ou dans les encoches ménagées dans les bords supérieurs des joues latérales du caisson, ces plateaux superposables étant susceptibles d'être disposés côte à côte de manière à recouvrir la surface supérieure du caisson ainsi que le volume de rangement de la rangée de sièges arrière et à définir ainsi un plan de couchage sensiblement horizontal lorsque les sièges arrière sont repliés.

Avantageusement, les plateaux rectangulaires superposables sont réalisés en résine synthétique du type ABS et sont munis, chacun, de deux ailes longitudinales de renfort, transversales par rapport à l'axe du véhicule.

De toute façon, l'invention sera mieux comprise et ses avantages ressortiront bien de la description qui suit, en référence au dessin schématique annexé représentant, à titre d'exemple non limitatif, un mode préféré d'exécution du dispositif d'aménagement pour véhicule spacieux:

Figure 1 est une vue de dessus simplifiée du véhicule avec la rangée de trois sièges arrière en position "avancée" et le caisson en place ;

Figure 2 est une vue de côté simplifiée du véhicule de figure 1 en position de route du dispositif ;

Figure 3 est une vue similaire à figure 2 en position de couchage du dispositif ;

Figure 4 est une vue en perspective du dispositif d'aménagement seul ;

Figure 5 est une vue en coupe selon la ligne V-V de figure 4;

Figure 6 est une vue en coupe longitudinale détaillant les moyens de fixation du caisson à l'intérieur du véhicule;

Figure 7 est une vue en perspective arrière avec découpe partielle du véhicule à l'arrêt équipé du dispositif de figure 4 en position de couchage avec son bloc cuisine et sa tablette prêts à l'emploi;

Figure 8 est une vue de côté simplifiée du véhicule de figure 7 pourvu, en outre, d'un auvent ;

Figure 9 est une vue schématique en coupe longitudinale partielle d'une variante de réalisation des moyens de couchage et de fermeture de la surface supérieure du caisson.

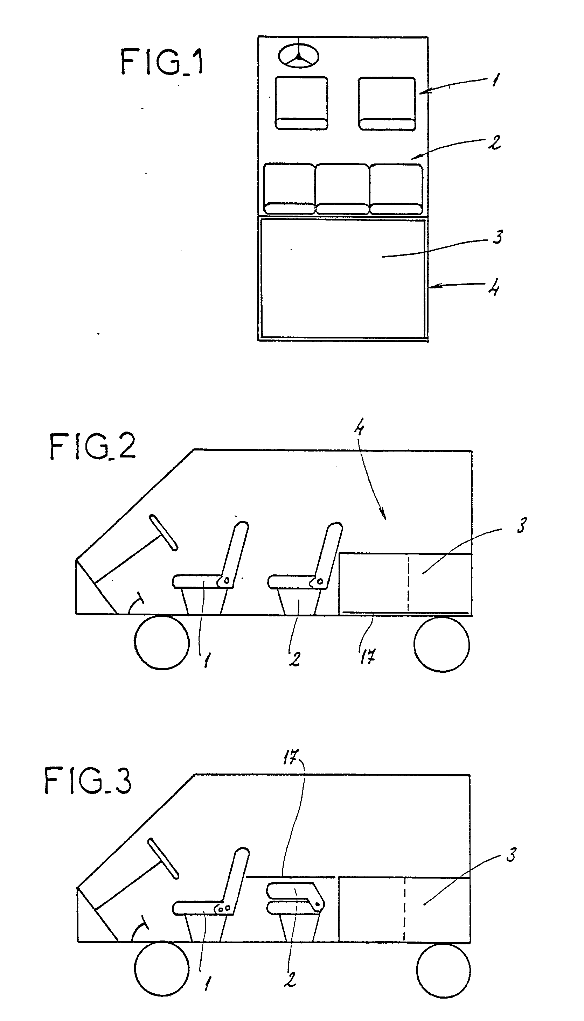

La figure 1 montre un véhicule spacieux dans lequel le dispositif de l'invention peut être installé. Il s'agit, en l'occurrence, de celui commercialisé sous la dénomination protégée "RENAULT ESPACE".

Un tel véhicule est équipé d'une rangée de sièges avant 1, comportant en général deux sièges, ainsi que d'une rangée de sièges arrière 2, au nombre de trois dans l'exemple représenté, qui sont repliables comme c'est souvent le cas pour les sièges arrière de véhicules et qui peuvent occuper deux positions longitudinales :

- une position avancée (figure 1) où ces sièges arrière 2 sont placés juste derrière les sièges avant 1, a une distance suffisante de ces derniers pour permettre à des passagers de s'y asseoir ;

- une position reculée (non représentée sur le dessin) où ces sièges arrière 2 sont placés bien plus loin derrière ces sièges avant 1, en laissant par suite un large espace devant les sièges arrière 2 en faisant pivoter de 180° les sièges avant 1, on transforme alors l'arrière du véhicule en salon.

En outre, il est possible, lorsque les sièges arrière 2 sont dans leur position avancée, de placer derrière eux une autre rangée de sièges arrière, afin d'obtenir une voiture familiale à sept sièges.

Comme le montrent les figures à 4, le caisson unique 3 du dispositif d'aménagement se loge dans le volume 4 délimité par la rangée de sièges arrière 2 en position "avancée" et par le hayon arrière du véhicule non référencé lorsqu' il est en position fermée. Il est de forme générale parallélépipédique et présente une largeur légèrement inférieure à la largeur intérieure du véhicule. Ce caisson 3 est constitué par une plaque de fond 5 rectangulaire dont chacun des bords transversaux parallèles à l'axe du véhicule est fixé solidairement à une joue latérale 6. La plaque de fond 5 est légèrement décalée vers le haut par rapport aux bords inférieurs 6a des deux joues latérales 6 destinés à reposer sur le plancher du véhicule de manière à définir avec ce dernier un logement 7 dont le rôle sera expliqué plus loin. Trois tubes transversaux 8, parallèles entre eux, en métal ou autre, à savoir un tube antérieur 8a, un tube médian 8b et un tube postérieur 8c, relient solidairement les deux joues latérales 6 au niveau de la surface supérieure du caisson 3. Cette dernière est fermée par deux couvercles 9 rectangulaires, identiques entre eux et articulés chacun, par l'un de leurs bords longitudinaux, autour du tube médian 8b. Chacun de ces deux couvercles 9 recouvre parfaitement une moitié de la surface supérieure du caisson 3 et peut être ouvert par pivotement autour du tube 8b pour donner libre accès à l'intérieur du caisson 3. Ils constituent de plus un plan horizontal apte à supporter de lourdes charges.

Le caisson 3 est ouvert à l'avant comme à l'arrière. Une cloison intérieure 10, parallèle à l'axe du véhicule, délimite deux compartiments 11a,11b dont l'un 11a est destiné à recevoir, dans sa partie postérieure, un réfrigérateur 12 tandis que sa partie antérieure fournit un volume libre 13 pour le rangement de bagages ou autres.

L'autre compartiment 11b présente, dans sa partie postérieure, un tiroir inférieur 14 de rangement coulissant entre une position rentrée à l'intérieur du caisson 3 et une position sortie à l'extérieur de celui-ci et présentant un coin tronqué 14a de manière à ménager, à l'intérieur du caisson 3, un volume prévu pour recevoir une bouteille de gaz. Directement au-dessus de ce tiroir 14 est disposé un bloc-cuisine 15, également monté coulissant, et qui sera décrit plus en détail ci-après. Le volume libre 16 délimité par la partie antérieure du compartiment 11b est, pareillement au volume 13, destiné au rangement.

Les deux couvercles rectangulaires 9, qui constituent les moyens de fermeture et de couchage de la surface supérieure du caisson 3, sont susceptibles, afin de réaliser la position couchage du dispositif, d'être associés à une plaque rectangulaire 17 équipée, sur son bord longitudinal postérieur, d'au moins deux pattes de liaison 18 permettant de la fixer en porte-à-faux sur le tube antérieur 8a du caisson 3.

Comme cela ressort de la figure 5, chaque patte de liaison 18 présente un épaulement 19 qui repose sur une partie du contour du tube antérieur 8a et prend appui sur celui-ci, tandis que son extrémité libre 20 est engagée dans une butée 21 qui l'empêche de se déplacer vers le haut.

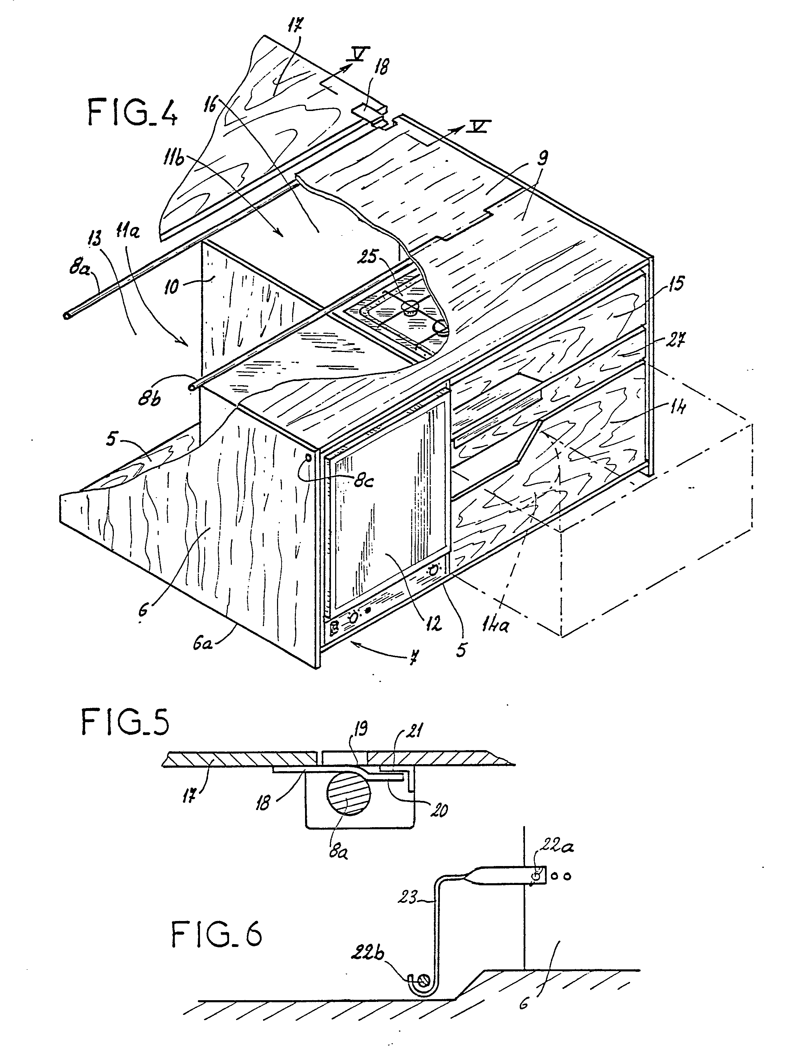

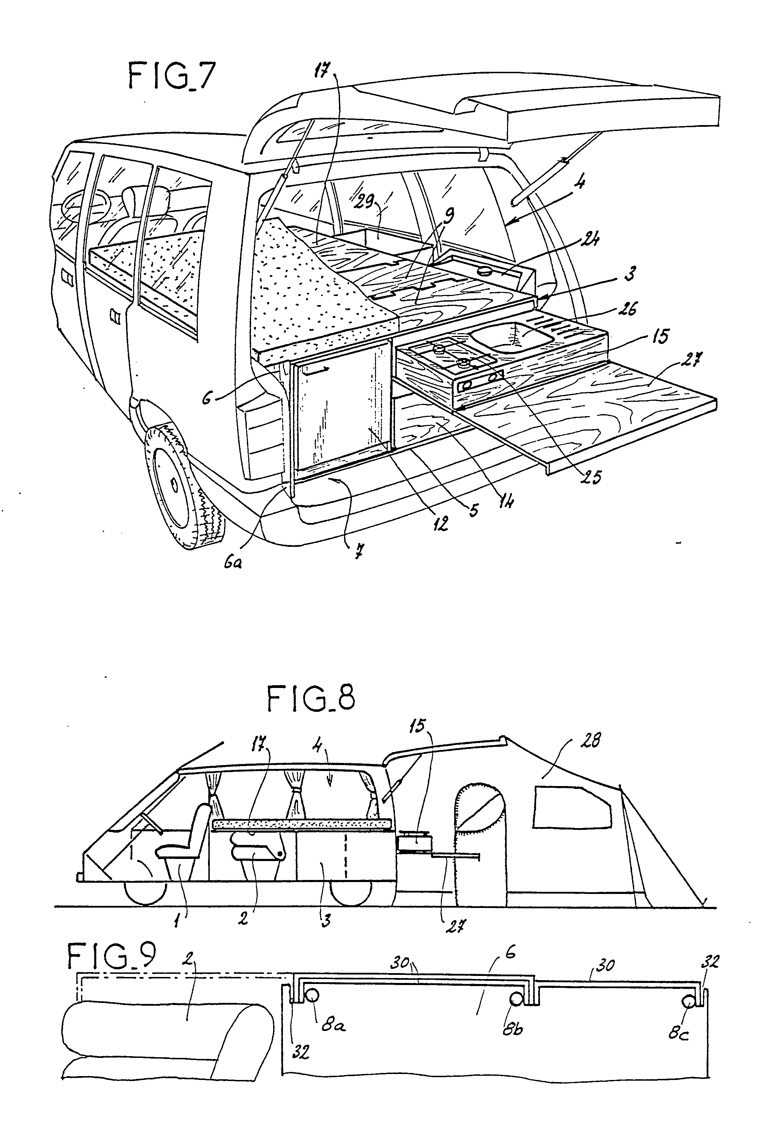

La hauteur du caisson 3 est telle que la plaque rectangulaire 17 ainsi fixée prend appui à l'avant sur les sièges arrière 2 en position "avancée" qui, bien entendu, ont été préalablement repliés, c'est-à-dire que leurs dossiers ont été basculés vers l'avant, comme montré aux figures 3 et 8.

Eventuellement, il peut être prévu des jambes de soutien repliables, fixées à l'avant de la plaque 17 et aptes à prendre appui sur le plancher du véhicule afin d'améliorer, si nécessaire, la stabilité de ladite plaque 17.

Cette disposition peut permettre de supprimer la rangée de sièges arrière 2 et ainsi, d'augmenter le volume libre disponible.

L'ensemble des couvercles 9 et de la planche 17 forme ainsi un plan de couchage horizontal continu sur lequel peut être disposé un matelas (figures 3 et 8).

Il est à noter que le montage et le démontage de la plaque rectangulaire 17 sur le caisson 3 est aisé. Après utilisation, elle est rangée dans le logement 7 entre la plaque de fond 5 et le plancher du véhicule et n'est donc absolument pas encombrante lorsque le dispositif est en position de route.

La figure 6 montre un moyen de fixation à attache rapide du caisson 3 à l'intérieur du véhicule. Chacune des joues latérale 6 est reliée, à l'aide d'un boulon 22a équipé d'un écrou "papillon", à un organe d'accrochage 23 dont l'extrémité libre, en forme de crochet, est agencée de manière à s'engager sur un axe 22b destiné à la fixation, sur le châssis du véhicule, du siège arrière 2 latéral correspondant ou sur toute autre partie du véhicule. Plusieurs alésages non référencés et destinés à recevoir le boulon 22 sont prévus sur chacune des joues 6. Ils permettent de régler la position longitudinale du caisson 3 à l'intérieur du véhicule et de pouvoir ménager ainsi un volume libre disponible au choix à l'avant ou à l'arrière du caisson 3.

La figure 8 montre, de manière plus détaillée, le véhicule à l'arrêt et agencé aussi bien pour le couchage que pour la cuisine.

Le caisson 3 est encastré entre les deux passages de roues arrière du véhicule. Au voisinage de chacun d'entre eux, la joue latérale 6 du caisson 3 et la paroi latérale du véhicule définissent une cavité apte à recevoir, par exemple, un réservoir d'eau potable 24 et/ou un bac de rangement 29 monté coulissant sur la joue latérale 6 et bloqué par rapport à cette dernière à l'aide d'un boulon "papillon" non représenté sur la figure 7.

Comme indiqué précédemment, le compartiment 11b du caisson comporte, dans sa région supérieure postérieure, un bloc-cuisine 15 coulissant comprenant un réchaud à gaz 25 alimenté par une bouteille de gaz disposée dans le volume défini par le coin tronqué 14a du tiroir 14, un évier 26 dont l'approvisionnement en eau est assuré par les réservoirs 24 pouvant être mis en service alternativement à l'aide d'un commutateur non représenté. Avantageusement, les conduits d'amenée d'eau des réservoirs 24 jusqu'à l'évier 26 sont disposés à l'intérieur du tube médian 8b.

Sous ce bloc-cuisine 15 est placée une tablette coulissante 27 déplaçable entre une position rentrée et une position sortie (figure 7).

Comme cela ressort de la figure 8, le dispositif d'aménagement de l'invention est prévu pour être associé avec le hayon ouvert du véhicule formant ainsi un toit de protection et avec un auvent 28 qui complète avantageusement le volume disponible pour le camping.

La figure 9 montre une variante de réalisation dans laquelle les moyens de couchage et de fermeture de la surface supérieure du caisson 3 sont constitués par trois plateaux rectangulaires 30 dont les bords longitudinaux, transversaux à l'axe de véhicule, sont recourbés à 90° de manière à former des ailes de renfort 31. En position de route, deux de ces plateaux 30 sont superposés et sont engagés, par leurs ailes 31, d'une part sur les tubes antérieur 8a et médian 8b du caisson et, d'autre part, à leurs extrémités, dans des encoches 32 ménagées dans les bords supérieurs des joues latérales 6 du caisson 3, tandis que le plateau rectangulaire restant 30 est disposé côte à côte et est engagé de la même façon sur le tube postérieur 8c et dans des encoches 32.

En position de couchage, l'un des plateaux 30 recouvrant la surface supérieure du caisson est placé en appui sur les sièges arrière 2 repliés, tandis que son aile de renfort 31 postérieure est engagée dans les encoches 32 des joues 6 au voisinage du bord supérieur antérieur du caisson 3.

Le plan horizontal de couchage est alors réalisé.

Il faut souligner que les matériaux utilisés pour réaliser les divers éléments du dispositif d'aménagement peuvent être en toute matière appropriée, à savoir en bois, en matière synthétique du type ABS, en métal ou autres.

Par ailleurs, en ce qui concerne la réalisation, les joues latérales 6 et la plaque de fond 5 peuvent être évidées de telle sorte que le caisson soit susceptible de s'encastrer sur les passages de roue; la plaque rectangulaire 17 peut être réalisée en plusieurs parties repliables l'une sur l'autre, les tubes transversaux peuvent être plus ou moins nombreux et présenter une forme autre que cylindrique. L'agencement du volume intérieur du caisson peut être également différent.

**Revendications**

1.- Dispositif d'aménagement pour véhicule automobile spacieux pouvant être équipé d'une rangée de sièges arrière (2) qui sont repliables et qui peuvent occuper deux positions longitudinales :
- une position "avancée" où ces sièges arrière (2) sont placés juste derrière les sièges avant (1), à une distance suffisante de ces derniers pour permettre à des passagers arrière de s'y asseoir,
- une position "reculée" où ces sièges arrière (2) sont placés bien plus loin derrière les sièges avant (1), les dimensions du véhicule étant telles que, dans la position "avancée" de cette rangée de siège arrière (2), il est possible de placer derrière ceux-ci une autre rangée de sièges arrière, caractérisé en ce qu'il est constitué par un seul et unique caisson (3) de forme générale parallélépipédique prévu pour être encastré dans un volume délimité, à l'arrière, par le hayon du véhicule et, à l'avant, par la rangée de sièges arrière (2) en position "avancée" et comprenant une plaque de fond (5) reposant sur le plancher du véhicule et solidaire de deux joues latérales (6) reliées entre elles au niveau de la surface supérieure du caisson (3) par au moins trois éléments tubulaires (8) transversaux parallèles entre eux, à savoir un élément antérieur (8a), un élément médian (8b) et un élément postérieur (8c), la surface supérieure du caisson (3) étant susceptible d'être obturée par des moyens de fermeture et de couchage (9,30).

2.- Dispositif d'aménagement selon la revendication 1, caractérisé en ce que le caisson (3) est équipé de moyens supports (6a) le surélevant de manière à définir un logement (7) entre sa plaque de fond (5) et le plancher du véhicule lorsque le caisson (3) est placé dans ce dernier.

3.- Dispositif d'aménagement selon la revendication 1 ou la revendication 2, caractérisé en ce que les moyens de fermeture et de couchage sont constitués par deux couvercles rectangulaires (9) articulés sur l'élément tubulaire médian (8b) et en ce qu'en complément de ces moyens (9), est prévue une plaque rectangulaire (17) susceptible, en position d'utilisation, d'être fixée de manière démontable par son bord postérieur en porte-à-faux sur l'élément tubulaire antérieur (8a) du caisson (3), de façon à définir, avec ces moyens de fermeture et de couchage (9), un plan de couchage sensiblement horizontal lorsque les sièges (2) de la rangée en position "avancée" sont repliés cette plaque rectangulaire (17), lorsqu'elle n'est pas en position d'utilisation, étant susceptible d'être placée dans le logement (7) prévu pour la recevoir entre la plaque de fond (5) du caisson (3) et le plancher du véhicule.

4.- Dispositif d'aménagement selon la revendication 1 ou la revendication 2, caractérisé en ce que les moyens de fermeture et de couchage de la surface supérieure du caisson (3) sont constitués par au moins trois plateaux rectangulaires (30) superposables au moins partiellement les uns avec les autres et immobilisés par rapport au caisson (3) par engagement au moins partiel sur les éléments tubulaires (8a,8b,8c) et/ou dans les encoches (32) ménagées dans les bords supérieurs des joues latérales (6) du caisson (3), ces plateaux (30) superposables étant susceptibles d'être disposés côte à côte de manière à recouvrir la surface supérieure du caisson (3) ainsi que le volume de rangement de la rangée de sièges arrière (2) et à définir ainsi un plan de couchage sensiblement horizontal lorsque les sièges arrière (2) sont repliés.

5.- Dispositif d'aménagement selon la revendication 4, caractérisé en ce que les plateaux rectangulaires (30) superposables sont réalisés en résine synthétique du type ABS et sont munis, chacun, de deux ailes longitudinales (31) de renfort, transversales par rapport à l'axe du véhicule.

6.- Dispositif d'aménagement selon l'une quelconque des revendications 1 à 5, caractérisé en ce que le caisson (3) est susceptible d'être fixé à l'intérieur du véhicule à l'aide de moyens de fixation à attache rapide constitués par un organe d'accrochage (23) relié, par l'une de ses extrémités, au caisson (3) à l'aide d'un boulon (22a) équipé d'un écrou "papillon" et, par son autre extrémité en forme de crochet, à un axe(22b)solidaire du vé-

hicule.

7.- Dispositif d'aménagement selon l'une quelconque des revendications 1 à 6, caractérisé en ce que le caisson (3) comporte une cloison intérieure (10) parallèle à l'axe du véhicule et qui délimite deux compartiments (11a, 11b) dont l'un (11a) est destiné à recevoir, dans sa partie postérieure, un réfrigérateur (12), tandis que sa partie antérieure fournit un volume libre (13) de rangement ou autre, l'autre compartiment (11b) présentant, dans sa partie postérieure, un tiroir inférieur (14) et, placé directement au-dessus de celui-ci, un bloc-cuisine (15) coulissant et, dans sa partie antérieure, un volume libre (16) de rangement ou autre.

8.- Dispositif d'aménagement selon la revendication 7, caractérisé en ce que le bloc-cuisine (15) comporte un réchaud à gaz (25), un évier (26) alimenté en eau par au moins un réservoir (24), et une tablette (27) coulissante entre une position rentrée et une position sortie par rapport audit bloc-cuisine (15).

9.- Dispositif d'aménagement selon la revendication 8, caractérisé en ce que le (ou les) réservoir-(s) à eau (24) est (sont) placé(s) (chacun) au-dessus d'un passage de roue du véhicule dans un volume délimité par une joue latérale (6) du caisson (3) et par la paroi latérale du véhicule et en ce que ledit volume est apte à recevoir un bac de rangement (29) monté coulissant sur la joue latérale (6).

10.- Dispositif d'aménagement selon la revendication 8 ou la revendication 9, caractérisé en ce que le tiroir inférieur (14) comporte un coin tronqué (14a) définissant un volume prévu pour recevoir une bouteille de gaz alimentant le réchaud à gaz (25).

FIG_1

FIG_2

FIG_3

FIG_4

FIG_5

FIG_6

FIG_7

FIG_8

FIG_9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 292 970 (T.C. WILSON) * colonne 2, ligne 43 - colonne 4, ligne 70; figures 1-9 * | 1 | B 60 P 3/36 B 60 N 2/32 |
| A | DE-U-8 631 206 (G. RATHGEB) * page 4,5; figures 1, 2 * | 1 | |
| A | WO-A-8 202 175 (JOHANSSON) * abrégé; figure 1 * | 1 | |
| A | EP-A-0 229 556 (DESOMBRE) * colonne 3, ligne 4 - colonne 6, ligne 35; figures 1-5 * | 1 | |

DOMAINES TECHNIQUES
RECHERCHES (Int. Cl.5)

B 60 P
B 60 N

Le présent rapport a été établi pour toutes les revendications

| Lieu de la recherche | Date d'achèvement de la recherche | Examinateur |
|---|---|---|
| LA HAYE | 10-01-1990 | VANNESTE M.A.R. |